(19) **Europäisches Patentamt / European Patent Office / Office européen des brevets**

(11) **EP 4 629 711 A1**

(12) **EUROPÄISCHE PATENTANMELDUNG**

(43) Veröffentlichungstag:
**08.10.2025 Patentblatt 2025/41**

(21) Anmeldenummer: **25164740.0**

(22) Anmeldetag: **19.03.2025**

(51) Internationale Patentklassifikation (IPC):
*H04W 56/00* *(2009.01)*

(52) Gemeinsame Patentklassifikation (CPC):
**H04W 56/0015**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **04.04.2024 DE 102024203105**

(71) Anmelder: **Siemens Aktiengesellschaft**
**80333 München (DE)**

(72) Erfinder:
• **Scholl, Christoph**
**74632 Neuenstein (DE)**
• **Villnow, Michael**
**90765 Fürth (DE)**

(74) Vertreter: **Siemens Patent Attorneys**
**Postfach 22 16 34**
**80506 München (DE)**

(54) **SYNCHRONISATION VON EINEM SENDER UND EINEM EMPFÄNGER**

(57) Die Erfindung betrifft die Rücksetzung eines Empfänger-Zeitgebers eines Empfängers für die Korrelation von Empfänger-Zeitinformationen mit einer durch einen Sender-Zeitgeber eines Senders erzeugten Zeit, wobei der Empfänger für den Empfang von durch den Sender an ihn übermittelte Funk-Nachrichten ausgestaltet ist. Im Zuge dieser Rücksetzung wird eine erste Nachricht des Senders durch den Empfänger empfangen, wobei das Empfangen einen Funk-Zeitabschnitt umfasst, bei dem der Funk des Empfängers aktiv ist. Es werden Informationen ermittelt, aus denen sich der Anfangszeitpunkt oder der Endzeitpunkt des Funk-Zeitabschnitts bestimmen lassen. Das Zurücksetzen des Empfänger-Zeitgebers erfolgt dann nach Maßgabe der ermittelten Informationen. Das Verfahren ist flexibel und lässt sich insb. auch für sog. "sleepy devices" bzw. Empfänger, die zweitweise in einem Schlafzustand sind, einsetzen.

FIG 3

**Beschreibung**

Die Erfindung betrifft ein Verfahren zur Rücksetzung eines Empfänger-Zeitgebers eines Empfängers für die Korrelation von Empfänger-Zeitinformationen mit einer durch einen Sender-Zeitgeber eines Senders erzeugten Zeit, wobei der Empfänger für den Empfang von durch den Sender an ihn übermittelte Funk-Nachrichten ausgestaltet ist, sowie einen Empfänger, einen Sender und ein System zur Durchführung eines erfindungsgemäßen Verfahrens.

Energiebezogene Messdaten werden häufig mit Zeitinformationen versehen, die für die Weiterverarbeitung herangezogen werden können.

Ein Beispiel für eine Messvorrichtung mit einem Funkmodul für drahtlose Übertragung von Messdaten ist die in der DE 10 2018 213 522 A1 beschriebene Sicherung. Die Sicherung ist modular aufgebaut mit einem Abschnitt, in dem die Sendefunktion lokalisiert ist. Durch diesen modularen Aufbau ist eine Nachrüstung (Retrofit) existierender Anlagen, z.B. Ortsnetzstationen, mit herkömmlichen Sicherungen möglich. Die Sicherung liefert Messwerte, wie den RMS-Werte des Stroms (RMS: root mean square bzw. quadratisches Mittel) und Temperaturwerte mit einer Zeitauflösung von 1s an ein zentrales Gateway (z.B. an ein Datenaustauschgerät, wie es in der DE 20 2021 000 293 U1 beschrieben ist). Hiermit können Lastschwankungen in einem Teilnetz überwacht werden. Für Anwendungen, bei denen auch Parameter wie Schein-, Wirk- und Blindleistung und davon abhängige Größen wie der Leistungsfaktor cos $\varphi$ und allgemein die Last-flussrichtung berechnet werden, ist es nötig, sowohl die vorherrschende Spannung in einem Strang als auch den Strom mit einer hohen zeitlichen Auflösung synchron zu messen. Diese Parameter berechnen sich aus der Phasenlage von Strom und Spannung, welche als Zeitversatz beider Signale beschrieben werden kann. Um die Parameter wie cos $\varphi$ ausreichend genau zu ermitteln, ist ein sehr geringer Zeitfehler zwischen den Datenpunkten der Strom- und Spannungsmessung nötig. Möchte man beispielsweise eine Genauigkeit eines Phasenwinkels von 1° bei einer Frequenz von 50 Hz erreichen, sollte eine Genauigkeit von 20 ms / 360 = 55,55$\mu$s erreicht werden.

Durch die technischen Gegebenheiten der oben angesprochenen Sicherung und die damit einhergehende geringe Zeitauflösung ist eine genauere Betrachtung der Vorgänge und damit die Berechnung von Parametern wie Schein-, Wirk- und Blindleistung sowie davon abhängige Größen wie der Leistungsfaktor cos $\varphi$ und die Lastflussrichtung trotz ausreichender Abtastrate nicht sichergestellt. Insbesondere bei der mathematischen Verarbeitung der Stromsignatur mit von außen bereitgestellten Messgrößen ist eine hohe zeitliche Synchronität erforderlich, da die Periodendauer eines 50Hz Stromsignals entsprechend 20 Millisekunden beträgt und damit deutlich unter der Auflösungsgrenze der genannten Sicherung liegt. Wenn diese z.B. seine Messdaten über eine Funkschnittstelle (basierend z.B. auf dem Zigbee-Protokoll) kommuniziert und aufgrund einer autarken Energieversorgung (Energy Harvesting) nicht immer aktiv ist (Zigbee Sleepy End Device), um Energie einzusparen, können bestehende Synchronisationsansätze nicht angewandt werden. Weiterhin hat ein wiederholtes Nachsynchronisieren einen großen Einfluss auf den Energieverbrauch des Sensorsystems und auf den Datenverkehr im Zigbee-Netzwerk.

Die Erfindung hat zur Aufgabe, ein Verfahren anzugeben, das die Zuordnung von durch einen Empfänger an einen Sender drahtlos übertragenen Zeitinformationen zu lokalen Zeitinformationen und damit insbesondere auch eine Zeitsynchronisation ermöglicht und das insb. auch für Empfänger geeignet ist, die zeitweise nicht mit Energie versorgt werden (sleepy device).

Diese Aufgabe wird durch ein Verfahren nach Anspruch 1, einen Empfänger nach Anspruch 11, einen Sender nach Anspruch 13 und ein System nach Anspruch 14 gelöst.

Zur besseren Lesbarkeit der nachfolgenden Ausführungen ist eine Erläuterung zur verwendeten Nomenklatur sinnvoll. Es wird im Folgenden von einem "Empfänger" und einem "Sender" gesprochen. Diese Begriffe beziehen sich auf ein Kernelement des erfindungsgemäßen Vorgehens, nämlich eine Nachricht (unten als "erste Nachricht" bezeichnet), die vom Sender an den Empfänger adressiert ist. Im Hinblick auf das Versenden dieser Nachricht wurden die Bezeichnungen gewählt. Ein zentraler Anwendungsfall der Erfindung sind Sensorsysteme, die mit Zeitstempeln versehene Sensordaten an ein zentrales Gateway schicken (z.B. die in der Beschreibungseinleitung angesprochene Sicherung). Bei einer Verwendung eines erfindungsgemäßen Verfahrens auf diese Konstellation wäre im Regelfall der unten angesprochene "Empfänger" das Sensorsystem und der "Sender" das Gateway. Der Begriff "Empfänger" kann in diesem Beispiel zu Verwirrungen führen, weil typischerweise der Großteil des Datenverkehrs zwischen den Elementen von Sensorsystem zu Gateway, d.h. von Empfänger zu Sender läuft.

Das erfindungsgemäße Verfahren betrifft die Rücksetzung (im Sinne einer Anpassung oder eines Resets) eines Empfänger-Zeitgebers (z.B. Systemuhr) eines Empfängers für die Korrelation (z.B. Synchronisation) von Empfänger-Zeitinformationen mit einer durch einen Sender-Zeitgeber eines Senders erzeugten Zeit bzw. Zeitpunkten, wobei der Empfänger für den Empfang von durch den Sender an ihn übermittelte Funk-Nachrichten ausgestaltet ist. Mit "Funk-Nachrichten" sind dabei beliebige drahtlos übertragene Nachrichten gemeint, die mittels eines drahtlosen Kommunikationsprotokolls (Zigbee, Bluetooth, Wi-Fi, Thread, Z-Wave etc.) übertragen werden.

Das erfindungsgemäße Verfahren basiert auf der Überlegung, dass bei einer direkten Übertragung einer Nachricht zwischen einem Sender und einem Empfänger die Verzögerung durch die Funkstrecke für viele Applikationen vernachlässigt werden kann, d.h. quasi instantan ist.

Daher kann das Senden einer ersten Nachricht von dem Sender zu dem Empfänger für eine Rücksetzung des Empfänger-Zeitgebers verwendet werden. Typischerweise ist der Prozess des Sendens von Nachrichten durch die im Folgenden beschriebene Abläufe charakterisiert. Zu einem Zeitpunkt tStart beginnt der Sendeprozess durch den Sender. Dieser umfasst in der Regel einen Vorbereitungsabschnitt und in einen zum Zeitpunkt tX,Start beginnenden Funkabschnitt. Auch für den Empfänger gibt es einen zum Zeitpunkt tX,Ende endenden Funkabschnitt, in dem die Nachricht erhalten wird. Nach Erhalt der Nachricht erfolgt üblicherweise eine Nachbearbeitung in einem zum Zeitpunkt tEnde endenden Nachbearbeitungsabschnitt durch den Empfänger.

Sowohl der Sender als auch der Empfänger weisen also während eines Zeitabschnitts Funkaktivität auf. Dabei wird - gemäß der obigen Überlegung - davon ausgegangen, dass diese Zeitabschnitte für Sender und Empfänger (mit hinreichender Genauigkeit) übereinstimmen bzw. es ist für das nachfolgende Vorgehen schon ausreichend, wenn Anfang oder Ende des Funk-Zeitabschnitts (im Folgende auch als "Funkabschnitt" bezeichnet) übereinstimmen. Es bezeichne tTx,Start den Beginn und tTx,Ende das Ende des Funkabschnitts beim Sender und tRx,Start den Beginn und tRx,Ende das Ende des Funkabschnitts beim Empfänger. Dann kann für die Synchronisation entweder die Relation

$$tX,Start = tTx,Start \approx tRx,Start \qquad (1)$$

oder die Relation

$$tTx,Ende \approx tRx,Ende = tX,Ende \qquad (2)$$

für das Rücksetzen des Empfänger-Zeitgebers verwendet werden. Dafür wird der Anfangszeitpunkts oder der Endzeitpunkts des Funk-Zeitabschnitts des Empfängers ermittelt und es erfolgt ein Zurücksetzen des Empfänger-Zeitgebers nach Maßgabe des ermittelten Anfangszeitpunkt oder Endzeitpunkt.

Prinzipiell gibt es zwei Möglichkeiten zu gewährleisten, dass der Sender mit Hilfe eines erfindungsgemäßen Verfahrens durch den Empfänger generierte Zeitinformationen mit lokalen Sender-Zeitinformationen korrelieren kann.

Erste Option: Im Sender wird davon ausgegangen, dass ein Rücksetzen des Empfänger-Zeitgebers nach einer festen Vorschrift stattfindet, z.B. wird der Zeitpunkt tRx,Start durch den Empfänger auf einen festen, dem Sender bekannten Zeitpunkt (z.B. null) gesetzt. Der Empfänger ermittelt diesen Zeitpunkt. Das Rücksetzen des Empfänger-Zeitgebers erfolgt dann z.B. aus technischen Gründen nicht sofort, sondern es wird die Zeitdauer zwischen den Zeitpunkten tRx,Start und tEnde bestimmt (im Folgenden wird diese Zeitdauer als Empfangsdauer $\Delta trx$ = tEnde - tRx,Start bezeichnet) und der Zeitpunkt tEnde registriert. Zu einem späteren Zeitpunkt t kann dann der Empfänger-Zeitgeber auf den Wert

$$tneu = \Delta trx + (t-tEnde) \qquad (3)$$

gesetzt werden. Der Sender kann danach vom Empfänger generierte Zeitinformationen in das eigene Zeitsystem umrechnen. Dafür bestimmt der Sender den Zeitpunkt gemäß Relation (1) im eigenen System und ist dafür eingerichtet, nach der Durchführung des Verfahrens von Empfänger übermittelte Zeitinformation auf diesen Zeitpunkt zu beziehen. Das heißt, eine von Empfänger gesendete Zeitinformation tEmpfänger kann dann entsprechend

$$tSender = tEmpfänger + tTx,Start \qquad (4)$$

in das eigene Zeitsystem transformiert werden, oder der Zeitgeber des Senders wird entsprechend dem des Empfängers zurückgesetzt (z.B. Zurücksetzen auf den Wert null für den Zeitpunkt tTx,Start). Bei diesem Vorgehen wird also der ermittelte Anfangszeitpunkt oder Endzeitpunkt für die Korrelation von von dem Empfänger übertragenen Zeitinformationen mit der durch den Sender-Zeitgeber erzeugten Zeit verwendet, wobei davon ausgegangen wird, dass der durch den Empfänger registrierte Anfangszeitpunkt oder Endzeitpunkt des Funk-Zeitabschnitts dem Anfangszeitpunkt oder Endzeitpunkt des Funk-Zeitabschnitts des Senders entspricht.

Zweite Option: Eine Umrechnung gem. Relation (3) ist nicht erforderlich, wenn der Empfänger-Zeitgeber auf die Zeit des Senders synchronisiert wird. Daher wird von der Anmelderin diese zweite Option präferiert. Um die Synchronisation vornehmen zu können, ist erforderlich, dass der Empfänger in die Lage versetzt wird, den Zeitpunkt des Beginns des Funkabschnitts tX,Start oder den Zeitpunkt des Endes des Funkabschnitts tX,Ende in dem System des Empfängers zu bestimmen. In der oben bespielhaft anhand des Anfangszeitpunkts des Funkabschnitts illustrierten Rücksetzung des Empfänger-Zeitgebers gem. Relation (3) sähe dann die Anpassung wie folgt aus

$$tneu = \Delta trx + (t-tEnde) + tX,Start(Sender) \qquad (5).$$

Es muss daher zu diesem Zweck dem Empfänger wenigsten eine Zeitinformation zur Verfügung stehen, die die Ermittlung der lokalen Zeit des Senders zum Anfangszeitpunkt oder zum Endzeitpunkt des Funk-Zeitabschnitts erlaubt. Eine Möglichkeit wäre, dass der Sender die lokale Zeit zum Anfangszeitpunkt oder zum Endzeitpunkt des Funk-Zeitabschnitts bestimmt und in einer Nachricht an dem Empfänger sendet, der dann diese Information aus der gesendeten Nachricht ermitteln kann. Wegen der typischen Architektur eines Senders (aus Recheneinheit und Funkeinheit) würde im Regelfall dieses Bestimmen eine Berechnung aus Anfangszeitpunkt und gemessener Zeitdauer beinhalten, z.B.

$$tTx,Start = tStart + \Delta ttx - (tTx,Ende - tTx,Start) \qquad (6) ,$$

wobei $\Delta ttx$ im Folgenden als Übertragungsdauer bezeichnet wird und den Zeitraum von dem Beginn der Übertragung tStart bis zum Abschluss der Funk-Abschnitts symbolisiert. Da der Empfänger ebenfalls eine Berechnung gem. Relation (5) vornehmen muss, sind sowohl senderseitig als auch empfängerseitig Berechnungen erforderlich. Um eine möglichst schnelle Rücksetzung des Empfänger-Zeitgebers zur gewährleisten, ist es evtl. sinnvoll, keine Berechnung, sondern nur Messungen beim Sender vorzusehen. Der Sender würde dann z.B. die Übertragungsdauer $\Delta ttx$ messen und die Werte von tStart und $\Delta ttx$ an den Empfänger übermitteln. Der Empfänger kann dann eine Rücksetzung des Zeitgebers z.B. wie folgt vornehmen:

$$tneu = \Delta trx + (t-tEnde) + tStart + \Delta ttx - (tRx,Ende - tRx,Start) \qquad (7)$$

Es sind dann mindestens zwei Zeitinformationen (ein Zeitpunkt und eine Zeitdauer) von dem Sender an den Empfänger zu übermitteln (z.B. könnte statt der Bestimmung von (tRx,Ende - tRx,Start) durch den Empfänger (tTx,Ende - tTx,Start) durch den Sender gemessen, an den Empfänger übermittelt und in Relation (7) verwendet werden, d.h. auch die Übermittlung von drei Zeitinformationen, eine Zeitpunkt und zwei Zeitdauern wäre denkbar). Die Zeitinformationen könnten zusammen in einer Nachricht übermittelt werden. Vorzugsweise werden jedoch der Anfangszeitpunkt tStart schon in der ersten Nachricht und die Zeitdauer(n) in einer zweiten Nachricht übermittelt. Das hat nicht nur den Vorteil, dass die Information zum Anfangszeitpunkt tStart schneller vorliegt, sondern das Senden dieser Zeitinformation ist auch ein Hinweis für den Empfänger, dass mit der Nachricht eine Zeitgeber-Rücksetzung angestoßen werden soll, d.h. dient der Identifikation der ersten Nachricht als zwecks Zeitanpassung bzw. -synchronisation gesendeter Nachricht. Die zweite Option ist also charakterisiert durch das Empfangen von mindestens einer Nachricht des Senders durch den Empfänger, wobei die mindesten eine Nachricht des Senders mindestens eine Zeitinformation umfasst, die die Ermittlung der lokalen Zeit des Senders zum Anfangszeitpunkt oder zum Endzeitpunkt des Funk-Zeitabschnitts erlaubt, während dem der Sender zwecks Sendens der ersten Nachricht funkt, und durch das Zurücksetzen des Empfänger-Zeitgebers nach Maßgabe der lokalen Zeit des Senders, wobei davon ausgegangen wird, dass der durch den Empfänger registrierte Anfangszeitpunkt oder Endzeitpunkt des Funk-Zeitabschnitts dem Anfangszeitpunkt oder Endzeitpunkt des Funk-Zeitabschnitts des Senders entspricht.

Typisch sind Architekturen, bei denen der Empfänger oder der Sender mit einer Funkeinheit (typischerweise ASIC-basierte HW-Implementierung unterer Schichten, z.B. MAC-Schicht, des OSI-Kommunikationsmodells) und einer Recheneinheit (z.B. Mikrokontroller) gebildet ist. Die Funkeinheit operiert dabei mit einem reduzierten Protokollstapel (z.B. bis MAC-Layer), der keine direkte Bestimmung der Funkdauer bzw. Funkempfangsdauer durch die Funkeinheit erlaubt. Gemäß einer Ausgestaltung des Erfindungsgegenstands wird die Dauer der Funkaktivität mit Hilfe eines PRS-Systems (Peripheral Reflex System) bestimmt, indem ein an einem Ausgang der Funkeinheit bereitgestelltes, die Aktivität anzeigendes Signal auf einer Timer-Peripherie der Recheneinheit geleitet wird. Es kann dann für die Ermittlung des Funkaktivitäts-Zeitraums ein Timer verwendet werden und es können bei Beginn und Ende des Timers mittels eines Capture-Interrupts Zeitstempel mit Hilfe einer Systemuhr der Recheneinheit erstellt und somit die Funkaktivität relativ zur System-Zeit geloggt werden. ("Interrupts" sind dabei ein Instrument, das in einem Mikrocontroller zur Verfügung steht, um auf Ereignisse zu reagieren, ohne explizit in einer Warteschleife auf das Ereignis warten zu müssen, und "Capture-Interrupts" sind spezielle "Interrupts", mit denen sich der Zeitpunkt eines Ereignisses (hier: Beginn und Ende des Timers) loggen lässt.

Die Recheneinheit kann zudem über einen Kommunikationsstack zur Versendung von Nachrichten verfügen und Zustände des Kommunikationsstacks wie der Beginn der Übertragung einer Nachricht und das Ende des Empfangs einer Nachricht über Callbacks ("Callbacks" sind optionale Mechanismen, die Einblicke in die Abläufe der Kommunikation erlauben) loggen. Die Speicherung von Logs kann als Ringpuffer erfolgen.

Die Erfindung betrifft auch einen Empfänger mit einer Funkeinheit und einer Recheneinheit, welcher für ein Durchführung eines erfindungsgemäßen Verfahrens eingerichtet ist. Dabei handelt es sich z.B. um ein Zigbee Sleepy Device. Ebenfalls betrifft die Erfindung einen Sender mit einer Funkeinheit und einer Recheneinheit und ein System aus einem erfindungsgemäßen Sender und Empfänger, welche für eine Durchführung eines erfindungsgemäßen Verfahrens eingerichtet sind.

Die Erfindung wird im Folgenden anhand eines Ausführungsbeispiels näher beschrieben. Es zeigen:

Fig. 1: eine prinzipielle Darstellung eines als "sleepy device" konzipierten Sensorsystems, das für eine drahtlose Übertragung von Sensordaten ausgestaltet ist (entspricht einem "Empfänger" im Sinne der obigen Ausführungen),

Fig. 2: einen schematischen Aufbau zur Registrierung von Funkaktivität mittels eines PRS-Systems,

Fig. 3: zeitliche Abläufe beim Versenden und Empfangen einer Nachricht im Zuge eines erfindungsgemäßen Verfahrens und

Fig. 4: die Speicherung von für das erfindungsgemäße Verfahren relevanten Ereignissen als Logs in einem Ringpuffer.

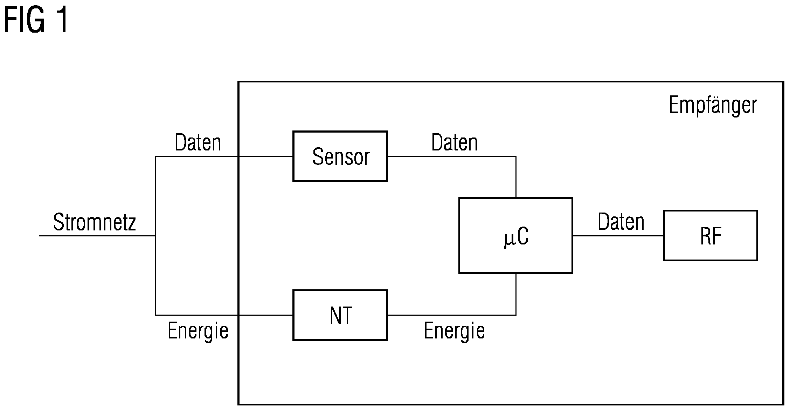

In Fig. 1 ist eine prinzipielle Darstellung eines Empfängers im Sinne der Ansprüche gezeigt. Es handelt sich um ein Sensorsystem, das zur Überwachung eines Stromkreises gedacht ist. Aus dem Stromnetz werden zum einen Daten erhoben (typischerweise Stromwerte), zum anderen erfolgt die Energieversorgung auch über dieses Netz. Kern dieses Sensorsystems ist ein Mikrokontroller μC. Dieser erhält Messdaten durch einen Sensor zur Erfassung von Stromwerten. Die Energieversorgung des Mikrokontrollers μC wird durch ein Netzteil NT gewährleistet, welches sich aus dem überwachten Stromnetz speist. Das Netzteil NT generiert die von dem Mikrokontroller μC benötigte Versorgungsspannung, z.B. 3,3V Gleichstrom, durch Funktionen wie Gleichrichtung, Filterung, Glättung und Transformation von aus dem Stromnetz bezogenen Signalen. Das Sensorsystem umfasst zudem ein Funkmodul RF, über das der Mikrokontroller μC Messdaten drahtlos versenden kann. Typischerweise sind diese Messdaten dann für die Weiterverarbeitung mit Zeitstempeln versehen. Nicht dargestellt ist die Energieversorgung von dem Sensor und dem Funkmodul RF, die direkt durch das Netzteil NT oder über den Mikrokontroller μC laufen kann.

Da das Sensorsystem sich aus dem überwachten Stromnetz speist (Energy Harvesting), ist die Energieversorgung unterbrochen, wenn kein Strom fließt. Es kann ein Energiespeicher (z.B. Kondensator-basiert) vorgesehen sein, der dann eine Grundversorgung weiter garantiert. Sinnvoll ist es auf jeden Fall, bei ausbleibender Energieversorgung aus dem Netz einen Zustand anzunehmen, in dem keine oder kaum Energie verbraucht wird. Insbesondere ist dann die Funkfunktion nicht aktiv. Man spricht in diesem Kontext auch von einem "sleepy device". Dieses ist z.B. für den Zigbee-Standard als Endgerät bzw. "Zigbee end device" definiert.

Das erfindungsgemäße Verfahren kann insbesondere zur Synchronisation von sog. "Zigbee Sleepy End Devices" verwendet werden. "Zigbee Sleepy End Devices" sind Geräte mit auf dem Zigbee-Protokoll basierender Kommunikation ohne permanente Energieversorgung. Die Energieversorgung basiert z.B. auf Energy Harvesting bzw. Energiegewinnung, z.B. aus einem überwachten Stromkreis, oder Batteriebetrieb. Typischerweise werden solche Geräte mittels eines Microkontrollers gesteuert (vgl. Fig. 1). Die Synchronisation kann unter Verwendung von Funktionen des Microcontrollers erfolgen. Beim Ausführungsbeispiel wird von Microcontrollern der Firma Silabs der Serie MGM210 ausgegangen (Funkchips, z.B. von Texas Instruments bieten eine ähnliche Funktionalität, z.B. TI CC2620: RFCPEISL Interrupt Register).

Nach dem Aufwachen eines Endgeräts (Zigbee Sleepy End Device) kann sich dieses bei dem Koordinator (Zigbee Coordinator) melden. Der Koordinator kann darauf hin eine erfindungsgemäße Synchronisierung einleiten. Ein zentraler Teil des Vorgehens ist hierbei, die Aktivität des mit Zigbee kommunizierenden Funkmoduls und den Zustand der Kommunikationsstacks zu loggen, d.h. zu registrieren bzw. aufzuzeichnen.

Die Aktivität des Funkmoduls wird mit Hilfe eines speziellen Bausteins des Silabs Microcontrollers, dem sog. Peripheral Reflex System (Abk. PRS) überwacht. Durch das PRS-System können periphäre Module praktisch direkt miteinander kommunizieren, ohne dass eine Verarbeitung von Signalen durch den Microcontroller erforderlich wäre. Ein sendendes Modul überträgt dann ein sog. "reflex signal", das durch das PRS-System an ein empfangendes Modul geroutet wird, welches dann nach Maßgabe des empfangenen Signals eine Aktion durchführen kann. Das PRS-System erlaubt es so, sog. Hardware Events (Hardwareereignisse) als Quelle auf andere Hardware Events oder Interrupts (d.h. ein Signal bzw. Signalerzeugung) zu mappen bzw. abzubilden. So kann man z.B. die Radio-Aktivität bzw. das Funkereignis "Paket Empfangen" auf einen Pin des Mikrocontrollers leiten und die Paket-Dauer mit einem Oszilloskop messen.

Gleichzeitig kann man mit Hilfe von dem PRS-System die Ereignisse auch auf eine Timer-Peripherie des Microkontroller mappen. Mit Hilfe des "Capture Interrupt" Signals der Timer-Peripherie können Zeitstempel mit Hilfe der Systemuhr des Mikrokontrollers erstellt werden; somit kann die Radio-Aktivität relativ zur System-Zeit geloggt bzw. aufgezeichnet werden. Weiterhin werden die Zustände des Kommunikationsstacks des Microcontrollers über sogenannten "Callbacks" geloggt. Callbacks sind optionale Mechanismen, die Einblicke in die Abläufe der Kommunikation erlauben.

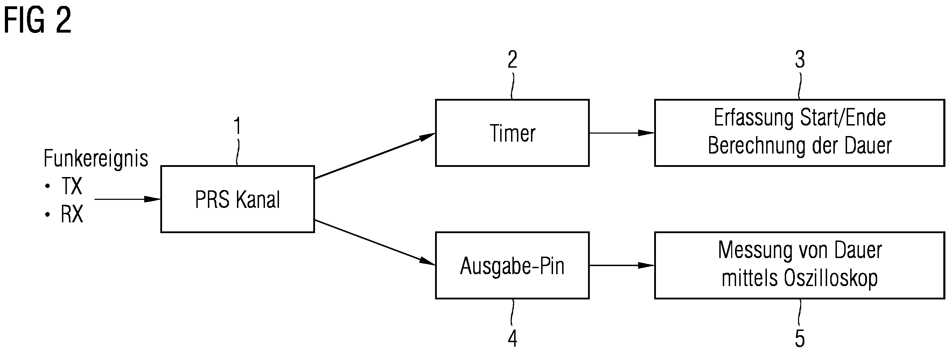

Fig. 2 zeigt den schematischen Aufbau dazu. Ein Funkereignis, typischerweise Senden TX oder Empfangen RX, wird auf einen PRS-Kanal des Microcontrollers geleitet (Schritt 1). Dieser Kanal kann das intern im Microkontroller zu Verarbeitung weiterleiten. Konkret wird mit Beginn des Ereignisses ein Timer gestartet (Schritt 2), der bis zum Ende des Ereignisses läuft. Durch die Erfassung von Start und Ende des Ereignisses und den dazwischen ablaufenden Timer wird die Dauer des Ereignisses berechnet (Schritt 3). Dieses Vorgehen lässt sich testen, indem parallel der PRS-Kanal während des Ereignisses ein Signal auf einen Ausgabe Pin gibt (Schritt 4). Der Zustand des Ausgabe Pins lässt sich dann mittels eines Oszilloskops erfassen und die Dauer des Zustandes messen (Schritt 5). Im Regelbetrieb fallen dann die Testschritte 4 und 5 natürlich weg.

In dem Moment, in dem ein Datenpaket über eine Funkstrecke von einem Sender an einen Empfänger versendet wird, sind beide Geräte synchron und tauschen Daten aus. Die Synchronität in diesem Moment entsteht, da die Antenne des Empfängers die Daten des Senders liest. Die Datenübertragung der Funkwellen findet nahezu mit Lichtgeschwindigkeit statt; somit kann die entstehende Verzögerung auf kurze Distanzen von Zigbee-Netzen vernachlässigt werden. Hat man Kenntnis davon, wann ein Packet versendet und wann es empfangen wurde, und wurde dazwischen die Aktivität der sendenden und empfangenden Funkmodule geloggt, so können die Verzögerungen, die während der Kommunikation entstehen, gemessen, quantifiziert und letztlich kompensiert werden.

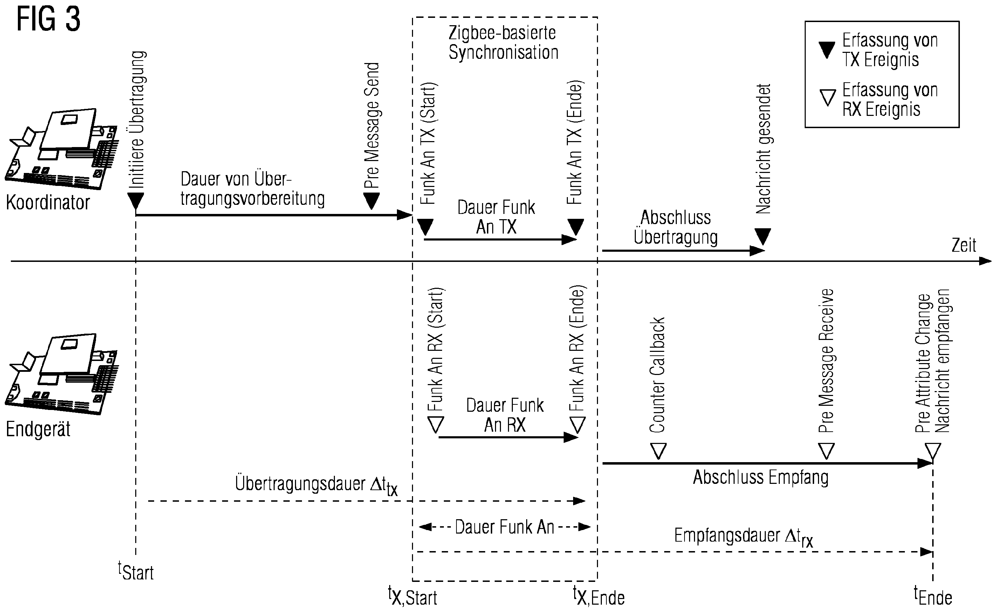

Ein Beispielhafte Sequenz von Ereignissen ist in Fig. 3 dargestellt. Dort ist ein Zigbee-Kordinator der Sender und ein Zigbee-Endgerät der Empfänger.

In dem Moment, in welchem der Sender eine Nachricht für den Versand vorbereitet, wird sie nicht direkt versendet, sondern die Übertragung ist verzögert. Die üblicherweise als "transmit delay" bezeichnete Zeit vergeht, bis die Nachricht versendet wurde. Auch erfolgt die Bestätigung, dass die Nachricht versendet wurde, nicht synchron, sondern asynchron. Die gleichen Verzögerungen entstehen auf der Empfangsseite.

Gründe für die Verzögerungen sind:

Die Funkstrecke ist belegt, da ein anderes Gerät sendet.
Der Mikrokontroller muss die Daten erst verarbeiten, bevor er sie versenden kann.
Der Mikrocontroller muss die Daten nach dem Empfang dekodieren.
Die Prozessoren sind stärker ausgelastet, wodurch höhere Durchlaufzeiten entstehen.
Die Funk-Aktivität und die Stack-Ereignisse (Beginn bzw. Ende der Aktivität des Kommunikationsstacks) werden sowohl auf Sender Seite als auch auf der Empfänger Seite geloggt.

Eine der Erfindung zugrunde liegende Annahme ist, dass die Funkverzögerung vernachlässigbar ist. Auf Fig. 3 bezogen bedeutet das:

$$\text{Funk An TX (Start)} \approx \text{Funk An RX (Start)}$$

$$\text{Funk An TX (Ende)} \approx \text{Funk An RX (Ende)}$$

$$\text{Dauer Funk an TX} \approx \text{Dauer Funk An RX} \approx \text{Dauer Funk An}$$

Gemäß einer bevorzugten Ausführungsform:

registriert der Sender den Beginn tStart(S) der Übertragung einer ersten Nachricht, welche den Wert tStart(S) enthält
misst der Sender die Übertragungsdauer $\Delta ttx$ (Zeit für Vorbereitung der Funkübertragung und Funkübertagung)
misst der Sender die Funkdauer tFunk bzw. "Dauer Funk an TX" mittels eines Timers
misst der Empfänger die Empfangsdauer $\Delta trx$ (Zeit für Funkempfang und Nachbearbeitung) registriert der Empfänger den Endpunkt tEnde des Empfangs
quittiert der Empfänger den Empfang der ersten Nachricht an den Sender (in Fig. 3 nicht dargestellt)
sendet der Sender eine zweite Nachricht, welche die gemessene Empfangsdauer $\Delta trx$ und die Funkdauer tFunk enthält (in Fig. 3 nicht dargestellt)
setzt der Empfänger zum Zeitpunkt t die eigene Systemzeit auf die des Senders durch tneu = tStart(S) + $\Delta ttx$ + $\Delta trx$ - tFunk + (t - tEnde)
Alternativ könnte tFunk auch empfängerseitig gemessen werden und die Übermittlung des Wertes in Schritt g) wegfallen.

Zu bemerken ist dabei, dass die Formel zur Berechnung in Schritt h) zwar von tStart(S) ausgeht, es für die Ermittlung der Senderzeit durch den Empfänger aber darauf ankommt, dass die vom Sender übermittelten Zeitinformationen die Ermittlung des Anfangszeitpunkts tX,Start oder des Endzeitpunkts tX,Ende der Funkübertragung (im Zeitsystem des Senders) erlaubt. Das ist hier der Fall, denn es gilt

$$tX,Start (Sender) = tStart(S) + \Delta ttx - tFunk$$

und

$$tX,Ende (Empfänger) = tStart(S) + \Delta ttx .$$

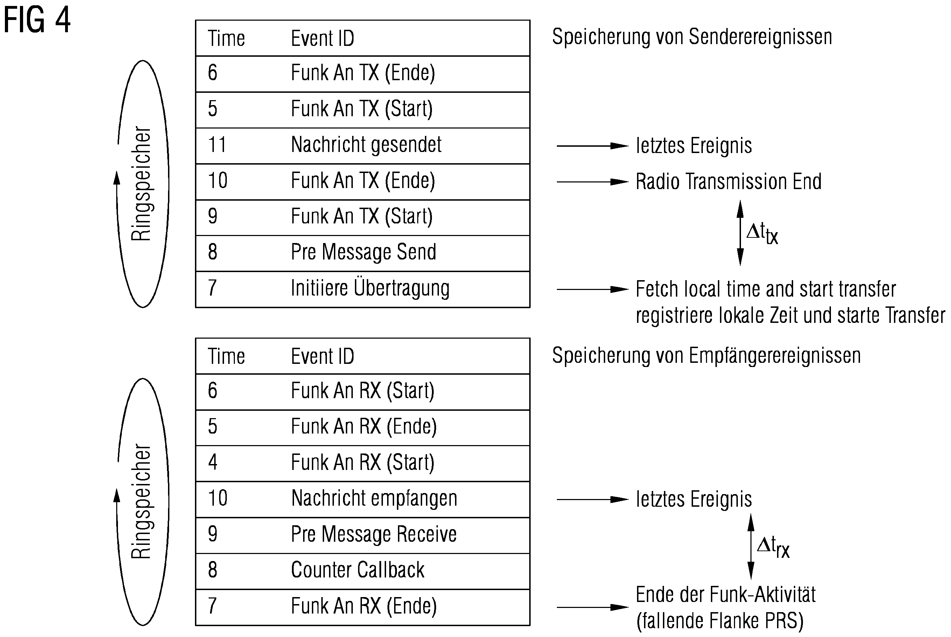

Bei diesem Verfahren ist es ausreichend, auf der Senderseite Übertragungs-Aktivitäten und auf der Empfängerseite Empfangs-Aktivitäten zu Loggen. Diese Logging-Dateien oder kurz Logs sind als Ringpuffer implementiert. Kommt ein neues Ereignis bzw. Event hinzu, wird das älteste immer direkt gelöscht. Auf Basis der Logs, werden die Sende- und Empfangs Verzögerungen $\Delta t_{tx}$ und $\Delta t_{rx}$ ermittelt. In Fig. 4 ist dafür ein Beispiel gezeigt. Auf der linken Seite sind für eine Implementierung von Ringspeichern bei Sender und Empfänger die Zeitanzeige ("Time") und die in der Implementierung verwendeten Ereignisnamen ("Event ID") angegeben. Über die Ziffern unter der Rubrik "Time" sind die Ereignisse bzgl. ihres Ablaufs geordnet. In der Ereignisabfolge des Senders (Transmitter Event Queue) entspricht die Zahl "5" dem ältesten und die Zahl "11" dem jüngsten Ereignis, in der Ereignisabfolge des Empfängers (Receiver Event Queue) die Zahl "4" dem ältesten und die Zahl "10" dem jüngsten Ereignis. Dabei haben die Ereignisnamen folgende Bedeutung:

Sender
Initiate Übertragung: Übertragung wird angestoßen
Pre Message Send: Vorbereitung von Übertragung
Funk An TX: Funk ist an, TX Modus (Sendemodus) wird eingeschaltet.
Funk An Tx: Funk ist an, TX Modus (Sendemodus) wird ausgeschaltet.
Nachricht gesendet: Bestätigung bzw. Quittierung des Abschlusses einer Übertragung
Empfänger
Funk An Rx: Funk ist an, RX Modus (Empfangsmodus) wird eingeschaltet.
Funk An RX: Funk ist an, RX Modus (Empfangsmodus) wird ausgeschaltet.
Counter Callback: Callback zum Loggen eines Ereignisses
Pre Message Receive: Vorbereitung von Abschluss vom Empfang

Die tatsächliche Uhrzeit, wann eine Nachricht vom Empfänger empfangen wurde, setzt sich aus der Startzeit im Empfänger (im Beispiel oben, Transmitter: Zeitschritt Nr. 7) und den beiden Zeitdifferenzen $\Delta t_{tx}$ und $\Delta t_{rx}$ zusammen. Dadurch kann - unter Kenntnis der Verzögerungen - die aktuelle Uhrzeit des End Geräts (Receiver) rekonstruiert werden (siehe oben).

Eine Verifikation der der Methode mit einem Netzwerk aus 13 Zigbee Sleepy End Devices und einem Koordinator ergab ein Ergebnis von 98,5% aller Datenpunkte innerhalb einer Fehlerschranke für den Synchronisationsfehler von $\pm 200\mu s$.

Zusammenfassend hat die Erfindung u.a. auch folgende Vorteile bzw. Eigenschaften:
Die Lösung erlaubt die Synchronisation von Zigbee Sleepy End Devices mit einer Genauigkeit im Bereich $\pm$ 200µs.

Der Ansatz kann in bestehende Zigbee Anwendungen integriert werden, da die Implementierung in der Applikationsschicht integriert werden kann. Dies hat den entscheidenden Vorteil, dass das Verfahren unabhängig von Firmware Updates des Kommunikationsmoduls funktioniert.

Der Zigbee Stack, welche die Kommunikation abwickelt, muss nicht modifiziert werden.

Ein entscheidender Teil der technischen Lösung ist das Logging der Events und das Rekonstruieren der Verzögerungen über den gesamten Kommunikationsprozess.

Die Lösung ist sowohl mit permanent versorgten Endgeräten wie auch mit Zigbee Sleepy End Devices kompatibel. Somit können autarke Endgeräte Energie sparen, da die Endgeräte nicht immer aktiv sein müssen und in einen passiven, energiesparenden Standby-Modus wechseln können, aber trotzdem eine genaue Zeitsynchronisation möglich ist.

**Patentansprüche**

1. Verfahren zur Rücksetzung eines Empfänger-Zeitgebers eines Empfängers für die Korrelation von Empfänger-Zeitinformationen mit einer durch einen Sender-Zeitgeber eines Senders erzeugten Zeit, wobei der Empfänger für den Empfang von durch den Sender an ihn übermittelte Funk-Nachrichten ausgestaltet ist, umfassend die Schritte

   - Empfangen einer ersten Nachricht des Senders durch den Empfänger, wobei das Empfangen einen Funk-Zeitabschnitt umfasst, bei dem der Funk des Empfängers aktiv ist,

- Ermitteln von Informationen, aus denen sich der Anfangszeitpunkt oder de1 Endzeitpunkt des Funk-Zeitabschnitts bestimmen lassen, und
- Zurücksetzen des Empfänger-Zeitgebers nach Maßgabe der ermittelten Informationen.

2. Verfahren nach Anspruch 1,
**gekennzeichnet durch**

- Absenden der ersten Nachricht an den Empfänger durch den Sender, wobei das Absenden einen Funk-Zeitabschnitt umfasst, bei dem der der Sender funkt,
- Ermitteln von Informationen, aus denen sich der Anfangszeitpunkt oder der Endzeitpunkt des Funk-Zeitabschnitts bestimmen lassen, und
- Verwenden der ermittelten Informationen für die Korrelation von von dem Empfänger übertragenen Zeitinformationen mit der durch den Sender-Zeitgeber erzeugten Zeit, wobei davon ausgegangen wird, dass der durch den Empfänger ermittelte Anfangszeitpunkt oder Endzeitpunkt des Funk-Zeitabschnitts dem Anfangszeitpunkt oder Endzeitpunkt des Funk-Zeitabschnitts des Senders entspricht.

3. Verfahren nach Anspruch 2,
**gekennzeichnet durch**
Zurücksetzen des Sender-Zeitgebers nach Maßgabe von Informationen, aus denen sich der Anfangszeitpunkt oder der Endzeitpunkt des Funk-Zeitabschnitts bestimmen lassen.

4. Verfahren nach Anspruch 1 oder 2,
**gekennzeichnet durch**

- Empfangen von mindestens einer Nachricht des Senders durch den Empfänger, wobei die mindesten eine Nachricht des Senders mindestens eine Zeitinformation umfasst, die die Ermittlung der lokalen Zeit des Senders zum Anfangszeitpunkt oder zum Endzeitpunkt des Funk-Zeitabschnitts erlaubt, während dem der Sender zwecks Sendens der ersten Nachricht funkt, und
- Zurücksetzen des Empfänger-Zeitgebers nach Maßgabe der lokalen Zeit des Senders, wobei davon ausgegangen wird, dass der durch den Empfänger registrierte Anfangszeitpunkt oder Endzeitpunkt des Funk-Zeitabschnitts dem Anfangszeitpunkt oder Endzeitpunkt des Funk-Zeitabschnitts des Senders entspricht.

5. Verfahren nach Anspruch 4,
**dadurch gekennzeichnet, dass**
die mindestens eine Nachricht die lokale Zeit des Senders zum Anfangszeitpunkt oder zum Endzeitpunkt des Funk-Zeitabschnitts enthält.

6. Verfahren nach Anspruch 4,
**dadurch gekennzeichnet, dass**
die mindestens eine Nachricht Zeitinformationen des Senders enthält, welche den Beginn des Sendeprozesses zum Senden der ersten Nachricht und mindestens eine sich auf den Sendeprozess beziehende Zeitdauer umfassen, und sich der Anfangszeitpunkt oder der Endzeitpunkt des Funk-Zeitabschnitts, während dem der Sender zwecks Sendens der ersten Nachricht funkt, aus diesen Zeitinformation des Senders durch den Empfänger rekonstruieren lassen.

7. Verfahren nach einem der Ansprüche 1 bis 6,
**dadurch gekennzeichnet, dass**

- der Empfänger oder der Sender mit einer Funkeinheit und einer Recheneinheit gebildet ist, und
- der Zeitraum der Aktivität der Funkeinheit mittels eines PRS-Systems ermittelt wird.

8. Verfahren nach Anspruch 7,
**dadurch gekennzeichnet, dass**

- für die Ermittlung des Zeitraums ein Timer verwendet wird, und
- bei Beginn und Ende des Timers mit Hilfe eines Capture-Interrupts Zeitstempel mit Hilfe einer Systemuhr der Recheneinheit erstellt und somit die Funkaktivität relativ zur System-Zeit geloggt wird.

9. Verfahren nach einem der Ansprüche 7 oder 8,
**dadurch gekennzeichnet, dass**

- die Recheneinheit über einen Kommunikationsstack zur Versendung von Nachrichten verfügt, und
- Zustände des Kommunikationsstacks wie Beginn der Übertragung einer Nachricht und Ende des Empfangs einer Nachricht über Callbacks geloggt werden.

10. Verfahren nach einem der Ansprüche 8 oder 9,
**dadurch gekennzeichnet, dass**
Logs als Ringpuffer gespeichert werden.

11. Empfänger mit einer Funkeinheit und einer Recheneinheit, welcher für eine Durchführung eines Verfahrens nach einem der Ansprüche 1 bis 10 eingerichtet ist.

12. Empfänger nach Anspruch 11,
**dadurch gekennzeichnet, dass**
es sich um ein Zigbee Sleepy Device handelt.

13. Sender mit einer Funkeinheit und einer Recheneinheit, welcher für eine Durchführung eines Verfahrens nach einem der Ansprüche 1 bis 10 eingerichtet ist.

14. System, bestehend aus einem Empfänger nach Anspruch 11 oder 12 und einem Sender nach Anspruch 13, welches für eine Durchführung eines Verfahrens nach einem der Ansprüche 1 bis 10 eingerichtet ist.

FIG 1

Empfänger

Stromnetz

Daten

Energie

Sensor

NT

Daten

Energie

µC

Daten

RF

EP 4 629 711 A1

FIG 2

Funkereignis
- TX
- RX

PRS Kanal    1

Timer    2

Erfassung Start/Ende
Berechnung der Dauer    3

Ausgabe-Pin    4

Messung von Dauer
mittels Oszilloskop    5

EP 4 629 711 A1

# FIG 3

EP 4 629 711 A1

Koordinator

Initiiere Übertragung

Dauer von Über-tragungsvorbereitung

Pre Message Send

Zigbee-basierte Synchronisation

Funk An TX (Start)

Dauer Funk An TX

Funk An TX (Ende)

Abschluss Übertragung

Nachricht gesendet

Erfassung von TX Ereignis

Erfassung von RX Ereignis

Zeit

Endgerät

Funk An RX (Start)

Dauer Funk An RX

Funk An RX (Ende)

Counter Callback

Pre Message Receive

Pre Attribute Change Nachricht empfangen

Abschluss Empfang

Übertragungsdauer $\Delta t_{tx}$

Dauer Funk An

Empfangsdauer $\Delta t_{rx}$

$t_{Start}$

$t_{X,Start}$

$t_{X,Ende}$

$t_{Ende}$

12

# FIG 4

EP 4 629 711 A1

Ringspeicher

Speicherung von Senderereignissen

| Time | Event ID |
|------|----------|
| 6 | Funk An TX (Ende) |
| 5 | Funk An TX (Start) |
| 11 | Nachricht gesendet |
| 10 | Funk An TX (Ende) |
| 9 | Funk An TX (Start) |
| 8 | Pre Message Send |
| 7 | Initiiere Übertragung |

→ letztes Ereignis

→ Radio Transmission End

$\Delta t_{tx}$

→ Fetch local time and start transfer
registriere lokale Zeit und starte Transfer

Ringspeicher

Speicherung von Empfängerereignissen

| Time | Event ID |
|------|----------|
| 6 | Funk An RX (Start) |
| 5 | Funk An RX (Ende) |
| 4 | Funk An RX (Start) |
| 10 | Nachricht empfangen |
| 9 | Pre Message Receive |
| 8 | Counter Callback |
| 7 | Funk An RX (Ende) |

→ letztes Ereignis

$\Delta t_{rx}$

→ Ende der Funk-Aktivität
(fallende Flanke PRS)

Europäisches
Patentamt

European
Patent Office

Office européen
des brevets

**EUROPÄISCHER RECHERCHENBERICHT**

**Nummer der Anmeldung**

EP 25 16 4740

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/019853 A1 (GHOSH CHITTABRATA [US] ET AL) 19. Januar 2017 (2017-01-19) | 1,2, 11-14 | INV. H04W56/00 |
| Y | * Absatz [0017] * | 7 | |
| A | * Absätze [0054], [0055] * <br> * Absätze [0061], [0065] * <br> * Abbildungen 2, 10, 12 * | 3-6,8-10 | |
| | ----- | | |
| Y | KOVACSHAZY TAMAS ET AL: "Time-Driven Sub-GHz Wireless Communication Protocol for Real-Time Cyber-Physical Systems", 2019 20TH INTERNATIONAL CARPATHIAN CONTROL CONFERENCE (ICCC), IEEE, 26. Mai 2019 (2019-05-26), Seiten 1-5, XP033577556, DOI: 10.1109/CARPATHIANCC.2019.8765929 [gefunden am 2019-07-17] | 7 | |
| A | * Abschnitt III.B * <br> * Abbildung 2 * | 1-6,8-14 | |
| | ----- | | |
| A | SCAZZOLI DAVIDE ET AL: "Fault Recovery in Time-Synchronized Mission Critical ZigBee-Based Wireless Sensor Networks", INTERNATIONAL JOURNAL OF WIRELESS INFORMATION NETWORKS, PLENUM PRESS, NEW YORK, NY, US, Bd. 24, Nr. 3, 22. Mai 2017 (2017-05-22), Seiten 268-277, XP036303780, ISSN: 1068-9605, DOI: 10.1007/S10776-017-0356-1 [gefunden am 2017-05-22] * Abschnitt 4 * * Abbildung 4 * | 1-14 | |

**RECHERCHIERTE SACHGEBIETE (IPC)**

H04W

-/--

Der vorliegende Recherchenbericht wurde für alle Patentansprüche erstellt

| Recherchenort | Abschlußdatum der Recherche | Prüfer |
|---|---|---|
| Den Haag | 18. August 2025 | Wijting, Carl |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

      ......................................................................

& : Mitglied der gleichen Patentfamilie, übereinstimmendes
    Dokument

EPO FORM 1503 03.82 (P04C03)

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2023/276421 A1 (YANG LUANXIA [CN] ET AL) 31. August 2023 (2023-08-31)<br>* Absatz [0031] *<br>* Absatz [0069] *<br>* Absatz [0084] *<br>* Abbildungen 4, 5A, 5B, 9 *<br>* Absatz [0095] *<br><br>- - - - - | 1-14 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. August 2025 | Wijting, Carl |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2025

| Im Recherchenbericht angeführtes Patentdokument | Datum der Veröffentlichung | Mitglied(er) der Patentfamilie | Datum der Veröffentlichung |
|---|---|---|---|
| US 2017019853 A1 | 19-01-2017 | KEINE | |
| US 2023276421 A1 | 31-08-2023 | CN 116250301 A | 09-06-2023 |
| | | EP 4214972 A1 | 26-07-2023 |
| | | US 2023276421 A1 | 31-08-2023 |
| | | WO 2022056848 A1 | 24-03-2022 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018213522 A1

- DE 202021000293 U1